# EUROPEAN PATENT SPECIFICATION

(11) **EP 4 145 200 B1**
(45) Date of publication and mention of the grant of the patent: **28.05.2025**
(21) Application number: 21194821.1
(22) Date of filing: 03.09.2021
(51) Int. Cl.: G02B 6/27, G02B 6/12, G02B 6/122

(54) **OPTICAL ELEMENT**
OPTISCHES ELEMENT
ÉLÉMENT OPTIQUE

(43) Date of publication of application: 08.03.2023
(73) Proprietor: Dr. Georgieva, Galina, 10715 Berlin (DE)
(72) Inventor: Dr. Georgieva, Galina, 10715 Berlin (DE)
(74) Representative: Eisenführ Speiser

(56) References cited:
- US-A1- 2012 207 428
- US-A1- 2016 337 041
- US-A1- 2017 153 391
- US-A1- 2020 341 216
- US-B1- 8 660 391

## Description

The invention relates to optical elements that comprise a plurality of scattering centers arranged in a scattering plane.

### Background of the invention

Modern high-speed communication systems are entirely based on fiber-optic transmission technology. Depending on the link distance, we distinguish between two basic modulation techniques. Long-haul systems rely on spectrally efficient coherent modulation formats, where a signal is coded in amplitude and phase. By contrast, short-reach systems use intensity-modulated direct detection (IM DD) scheme, in which bits are coded only in the signal amplitude. Currently, the internet traffic growth takes place predominantly in the short-reach inter- or intra-data center interconnect systems, where applications such as video streaming, online meetings, social media, virtual marketplaces etc. are being increasingly used. For that reason, the coherent formats are expected to enter the short-reach domain, since they allow for a better scalability and power efficiency than the traditional IM DD.

The largest constraint on the way towards coherent formats for data center interconnects is the total cost of the required systems architecture. Several competing platforms promise for cost reductions by developing on-chip solutions for integrated coherent transmitters and receivers. The highest integration density so-far is offered by silicon photonics. A key advantage hides behind the co-integration of photonics and electronics on existing (Bi)CMOS foundries, by using a mature fabrication process flow. In silicon-based integrated transmitters and receivers, optical in-and out-coupling to a standard single-mode-fiber (SMF) supporting two orthogonal polarizations is advantageous. Optical coupling can face on the one hand issues such as coupling loss, polarization-dependent-loss (PDL), limited bandwidth, excitation of undesired modes, polarization crosstalk and on the other hand fabrication complexity, process variations intolerance, complex packaging and restriction on the wafer-scale characterization. The trade-off between these aspects depends on the coupling scheme of choice.

An optical element comprising the features of the preamble of claim 1 is disclosed in US Patent Application Publication US 2020/0341216 A1.

An optical element without group-individual orientation of scattering centers is disclosed in US Patent 8, 660, 391 B1.

### Objective of the present invention

An objective of the present invention is to provide an optical element with improved optical characteristics.

### Brief summary of the invention

According to the present invention, an optical element according to claim 1 is provided.

Accordingly, an optical element comprises a plurality of scattering centers arranged in a scattering plane of the optical element. The optical element comprises at least two oriented groups of scattering centers, wherein a group-individual orientation is assigned to each oriented group. The scattering centers of each oriented group are oriented in accordance with the same group-individual orientation. The group-individual orientations are angled relatively to one another.

An advantage of the optical element of claim 1 is that oriented scattering centers provide additional design options to improve the device's performance: Scattering is stronger, when there is an array of periodic identical objects, which scatter light in the same direction. When we use objects (scattering centers), which scatter light in different directions, a forwards-scattered wave can be compensated by a backwards-scattered wave. A precise design of the scattering centers' dimensions may lead to a complete compensation of forwards-and backwards-scattered waves. Oriented scattering elements such as for instance elliptical or oval scattering centers instead of or in addition to circular scattering centers make it possible that each neighboring scattering center scatters light in a different direction. Thus, we may avoid constructive superposition of scattered light and enhance the diffraction efficiency.

The angle between adjacent group-individual orientations preferably equals 180° divided by the number of group-individual orientations. For instance, in case of three groups, the angle between adjacent group-individual orientations preferably equals 60°.

A first access side of the optical element may provide a first access port for inputting and/or outputting radiation along a first direction that lies in the scattering plane. The optical element may also have a second access port for inputting and/or outputting radiation along a second direction that differs from the first direction and also lies in the scattering plane.

The arrangement of the scattering centers in the scattering plane is preferably axially symmetric with respect to the first and second direction. Additionally or alternatively, the arrangement of the scattering centers in the scattering plane may be axially symmetric with respect to a mirror axis that mirrors the first and second direction with respect to one another.

The first and second direction are preferably angled by an angle between 80° and 90°.

All of the scattering centers that belong to the same group are preferably identically shaped.

The scattering centers of the oriented groups are preferably rotationally asymmetric or non-circular.

The oriented scattering centers are preferably axially symmetric with respect to the group-individual orientation of their group.

All scattering centers of the oriented groups are preferably identically shaped and/or identically sized.

The oriented scattering centers are preferably elongated along the respective group-individual orientation.

The scattering centers of at least one group of scattering centers are preferably elliptical, or rhombic, or oval.

The optical element preferably also comprises at least one un-oriented group of un-oriented (e. g. symmetric, preferably circular or star like) scattering centers.

According to an exemplary embodiment, the optical element comprises a first group of scattering centers and a second group of scattering centers, wherein the scattering centers of the first group are oriented along a first orientation, wherein the scattering centers of the second group are oriented along a second orientation, and wherein the first orientation and the second orientation are angled by 90°. The optical element preferably also comprises a third group of scattering elements without any orientation.

According to another exemplary embodiment, the optical element comprises:
- a first group of scattering centers that are oriented identically,
- a second group of scattering centers that are oriented identically, wherein the orientation of the second group is angled by 45° relatively to the orientation of the first group,
- a third group of scattering centers that are oriented identically, wherein the orientation of the third group is angled by 45° relatively to the orientation of the second group, and angled by 90° relatively to the orientation of the first group, and
- a fourth group of scattering centers that are oriented identically, wherein the orientation of the fourth group is angled by 45° relatively to the orientation of the third group, angled by 90° relatively to the orientation of the second group, and angled by 135° relatively to the orientation of the first group.

The latter embodiment preferably also comprises a fifth group of un-oriented scattering centers.

A first access side of the optical element may provide an access port for inputting radiation having a first mode. A second access side of the optical element may provide a first and second access port. The scattering centers are preferably arranged such that each of the latter ports of the second access side outputs radiation having said first mode and at least a second mode in response to the radiation that is inputted at the first access side.

The optical element may be a polarization de-/multiplexer. In the latter case, a first access side of the optical element preferably provides a first access port for inputting and/or outputting radiation having a first polarization, and a second access port for inputting and/or outputting radiation having a second polarization that differs from the first polarization. A second access side of the optical element preferably provides an access port for inputting and/or outputting radiation of both, the first and second polarization.

The first polarization is preferably perpendicular to the second polarization.

Further embodiments of the optical element of the invention are defined in the dependent claims.

### Brief description of the drawings

In order that the manner in which the above-recited and other advantages of the invention are obtained will be readily understood, a more particular description of the invention briefly described above will be rendered by reference to specific embodiments thereof which are illustrated in the appended drawings. Understanding that these drawings depict only typical embodiments of the invention and are therefore not to be considered to be limiting of its scope, the invention will be described and explained with additional specificity and detail by the use of the accompanying drawings in which
- Figure 1: illustrates an exemplary embodiment of an optical element where oriented scattering centers of a scattering unit are equally spaced and the edges of the scattering unit form straight lines,
- Figure 2: illustrates the arrangement of the oriented scattering centers of Figure 1 in further detail,
- Figure 3: illustrates an alternative arrangement of oriented and un-oriented scattering centers for the embodiment of Figure 1,
- Figure 4: illustrates an exemplary embodiment of an optical element where the distance between oriented scattering centers vary and the edges of the scattering unit are bent,
- Figure 5: illustrates the arrangement of the oriented scattering centers of Figure 4 in further detail,
- Figure 6: illustrates an exemplary embodiment of an optical element where a second access side of the optical element outputs radiation with at least two modes in response to single-mode radiation inputted at a first access side,
- Figures 7- 8: illustrate simulation results of the embodiment according to Figures 1 and 2, and
- Figure 9: illustrates an exemplary embodiment of an SOI waveguide and an exemplary embodiment of a scattering unit fabricated in SOI-material.

### Detailed description of the preferred embodiments

The preferred embodiments of the present invention will be best understood by reference to the drawings. It will be readily understood that the present invention, as generally described and illustrated in the figures herein, could vary in a wide range. Thus, the following more detailed description of the exemplary embodiments of the present invention, as represented in the figures, is not intended to limit the scope of the invention, as claimed, but is merely representative of presently preferred embodiments of the invention.

In general, when light is incident on an object, two effects can result - diffraction and scattering. Prior art grating couplers are generally considered as diffracting structures only. However, when we look at typical two-dimensional grating couplers according to prior art (hereinafter referred to as "prior art 2D GC"), we see that every row consists of discrete elements with sizes smaller than the light spot size of the waveguide mode. For that reason, in-plane scattering will occur in parallel with diffraction. If we have a periodical array of identical objects, the scattering strength increases due to the identical scattering direction and the constructive superposition of the fields scattered by every single element. Thus, scattered power in a prior art 2D GC is not negligible. There are several consequences of scattering for prior art 2D GCs. First, increased scattering reduces the diffraction efficiency. Therefore, the prior art 2D GCs suffer from higher insertion loss. Second, scattering is able to convert the polarization of an incident wave, which explains the high cross-polarization in prior art 2D GCs. Cross-polarization is inevitably related to polarization crosstalk. Third, the cross-polarization causes higher-order mode coupling, because of its field distribution. In single-mode waveguides, the higher-order modes will be filtered, which leads again to higher insertion loss. Fourth, due to the random polarization rotation in a SMF cross-polarization in the waveguides is not necessarily in phase with the target signal. Different phase relations in the two waveguides can lead to significant PDL.

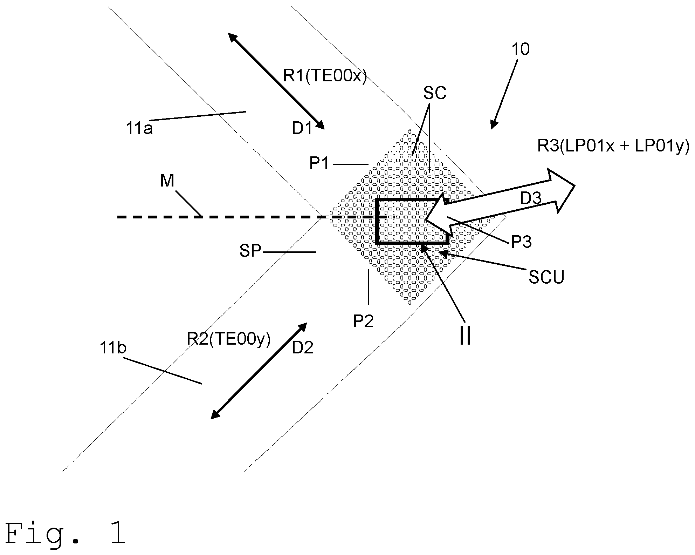

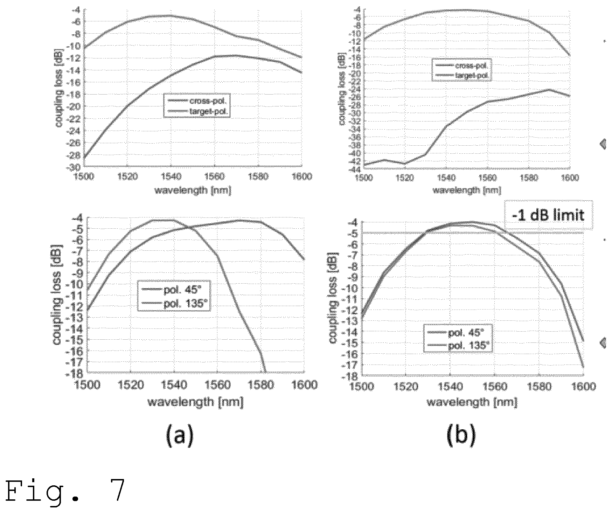

In connection with Figures 1-9 , exemplary embodiments of optical elements will be presented that mitigate the above deficiencies and problems, for instance in the following way: Scattering is stronger, when we have an array of periodic identical objects, which scatter light in the same direction. When we use objects (scattering centers), which scatter light in different directions, a forwards-scattered wave can be compensated by a backwards-scattered wave. A precise design of the scattering centers' dimensions may lead to a complete compensation of forwards- and backwards-scattered waves. To realize this principle we use as scattering centers elliptical instead of or in addition to circular scattering centers. When we change the ellipses orientation along the grating axes, we can ensure that each neighboring object scatters light in a different direction. Thus, we avoid constructive superposition of scattered light and enhance the diffraction efficiency.

Figure 1 depicts a first exemplary embodiment of an optical element 10 according to the present invention. The optical element 10 forms a two-dimensional grating coupler and comprises a plurality of scattering centers SC that are arranged in a scattering plane SP of the optical element 10 and together form a scattering unit SCU. A first waveguide 11a and a second waveguide 11b are connected to the scattering unit SCU.

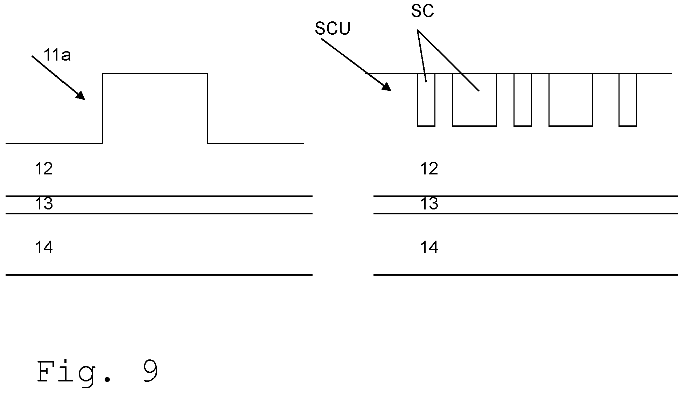

The waveguides 11a and 11b are preferably SOI (silicon-on-insulator) ridge waveguides. The scattering centers SC are preferably formed by holes etched inside the upper silicon layer 12 of the SOI material. Figure 9 shows an exemplary embodiment of a cross section of the first waveguide 11a and a cross section of a portion of the scattering unit SCU. Reference numeral 13 indicates the SiO2 layer of the SOI material and reference numeral 14 indicates the substrate of the SOI material.

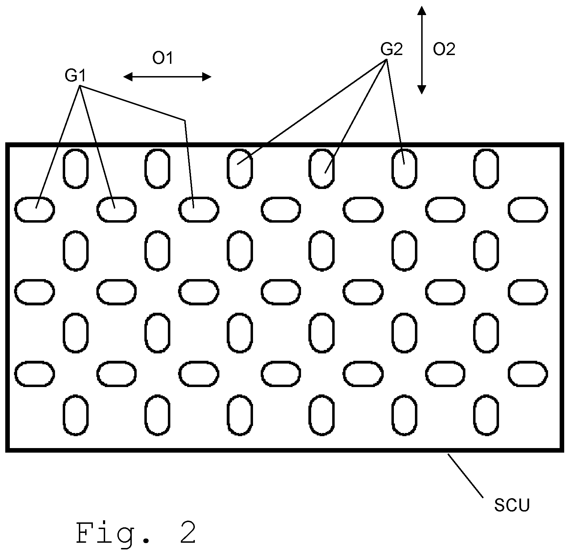

Figure 2 visualizes section II of Figure 1 and the arrangement of the scattering centers SC in further detail.

The embodiment of Figures 1 and 2 comprises a first group G1 of scattering centers SC that are oval and oriented horizontally (with respect to their longitudinal axis and the page's orientation of Figure 1). The group-individual orientation of the first group G1 corresponds to the longitudinal axis of the oval scattering centers and is marked by a left right arrow O1 in Figure 2.

The scattering centers SC of a second group G2 are also oval but oriented vertically (again with respect to their longitudinal axis and the page's orientation of Figure 1). In other words, the scattering centers SC of both groups G1 and G2 are not circular and their group-orientation is perpendicular relatively to one another. The group-individual orientation of the second group G2 corresponds to the longitudinal axis of the oval scattering centers and is marked by an up down arrow O2 in Figure 2.

In the exemplary embodiment of Figure 1, the scattering centers SC of both groups G1 and G2 are axially symmetric with respect to both their longitudinal axis as well as their group-individual orientation O1 and O2.

The optical element 10 of Figure 1 comprises a first access port P1 which is connected to the waveguide 11a. The first access port P1 allows inputting and/or outputting radiation R1 along a first direction D1 that lies in the scattering plane SP.

A second access port P2 of the optical element 10 of Figure 1 is connected to the waveguide 11b and allows inputting and/or outputting radiation R2 along a second direction D2 that is angled by an angle between 80° and 90° with respect to the first direction D1. The second direction D2 also lies in the scattering plane SP.

The arrangement of the scattering centers SC in the scattering plane SP is axially symmetric with respect to a mirror axis M that mirrors the first and second direction D1 and D2 with respect to one another. In the exemplary embodiment of Figure 1 , the arrangement of the scattering centers SC in the scattering plane SP is also axially symmetric with respect to both the first and second direction D1 and D2.

A third access port P3 of the optical element 10 of Figure 1 allows inputting and/or outputting radiation R3 along a third direction D3 that is angled by an angle between 70° and 90° with respect to the scattering plane SP. In other words, in the exemplary embodiment of Figure 1 , the third direction D3 is approximately perpendicular to the page's plane of Figure 1.

As depicted in an exemplary fashion in Figure 1 , radiation R3 may be inputted at the third access port P3. Radiation R3 may comprise a first portion with LP01x-mode and X-polarization as well as a second portion with LP01y-mode and Y-polarization.

The scattering centers SC may transform the electromagnetic fields such that the first access port P1 outputs radiation with TE00x-mode and X-polarization. The second access port P2 outputs radiation in TE00y-mode and with Y-polarization. X and Y refer to coordinates of a x-y-z-coordinate system.

Of course, the optical element 10 of Figure 1 may be operated inversely by inputting radiation with a TE00x mode at the first access port P1 and inputting radiation R2 with a TE00y-mode at the second access port P2. Then, the scattering centers SC may transform the electromagnetic fields such that the third access port P3 outputs the radiation R3 with both LP01x-mode and LP01y- mode.

In other words, the optical element 10 may operate as a polarization de-/multiplexer in both directions.

The angle between the two group-individual orientations O1 and O2 preferably equals 180° divided by the number of group-individual orientations. If the embodiment of Figure 1 comprised three or more groups of scattering centers SC and therefore three or more group-individual orientations instead of two, the angle between adjacent group-individual orientations would preferably equal 180° divided by the number of group-individual orientations.

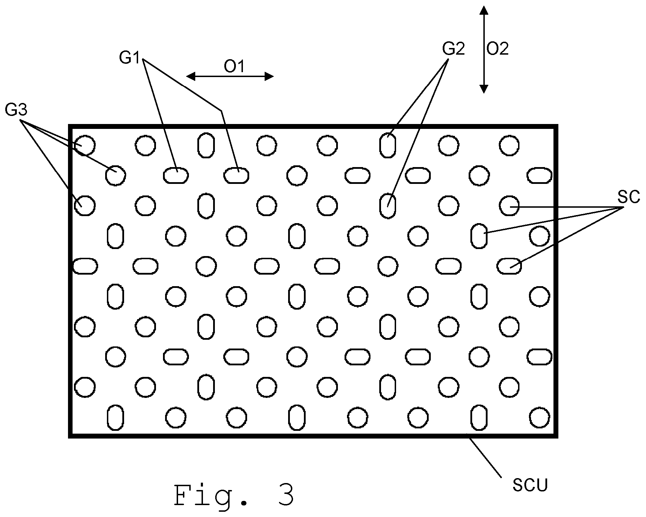

Figure 3 depicts another exemplary arrangement of scattering centers SC in the scattering plane SP. The scattering centers SC of Figure 3 form a scattering unit SCU that can be integrated in the optical element 10 of Figure 1 in order to replace the scattering unit SCU depicted in Figure 2.

The scattering unit SCU of Figure 3 comprises a first group G1 of scattering centers SC that are oriented horizontally (with respect to the page's orientation of Figure 1), a second group G2 of scattering centers SC that are oriented vertically, and an un-oriented group G3 that comprises circular scattering centers SC. The scattering centers SC of the first and second group G1 and G2 may be identically to the scattering centers SC of the first and second group G1 and G2 of Figures 1 and 2.

The concentration and arrangement of the circular scattering centers SC influences the conversion of radiation with respect to the modes. Therefore, the circular scattering centers SC may be added to achieve other conversion behaviors than the one discussed above with reference to Figures 1 and 2.

The exemplary embodiment according to Figures 1 and 2 has been subjected to a numerical analysis based on a finite-integration-technique time-domain method by the commercial Simulia CST.

The following table lists the geometric details and simulation results regarding a reference 2D GC (with only circular holes), and the proposed optical element according to Figures 1 and 2 with elliptical holes. Both structures are designed for C-band.

| Geometric properties | Reference 2D GC with circular holes only | Proposed 2D GC according to Figures 1 and 2 |
|---|---|---|
| Grating period | 622 nm | 594 nm |
| Shear angle | 2° | 2° |
| Etch depth | 120 nm | 140 nm |
| Holes shape | Circular: diameter = 440 nm | Elliptic: short side = 240 nm, long side = 330 nm |

The following table lists the geometric details and simulation results regarding a reference 2D GC (with only circular holes), and the proposed optical element according to Figures 1 and 2 with elliptical holes. Both structures are designed for O-band.

| Geometric properties | Reference 2D GC with circular holes only | Proposed 2D GC according to Figures 1 and 2 |
|---|---|---|
| Grating period | 485 nm | 480 nm |
| Shear angle | 2° | 2° |
| Etch depth | 120 nm | 140 nm |
| Holes shape | Circular: diameter = 280 nm | Elliptic: short side = 180 nm, long side = 260 nm |

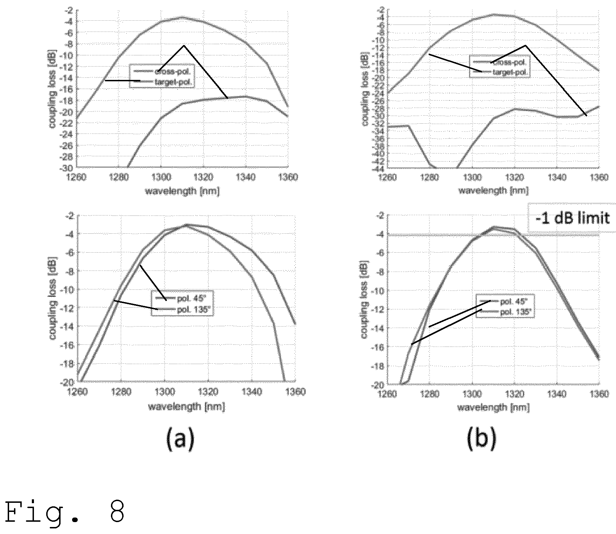

The simulation results are shown in Figure 8 (a) and (b) for C-band and Figure 9 (a) and (b) for O-band.

The reference structure and the proposed structure according to Figures 1 and 2 differ little in terms of insertion loss and bandwidth. While standard designs show a strong cross-polarization and PDL, the proposed design perform significantly better, reaching values acceptable for the target applications. The reduced cross-polarization and polarization crosstalk will require no compensation for certain coherent modulation formats. More important is the significant improvement in terms of PDL. The latter greatly degrades the performance of coherent receivers and cannot be compensated by digital signal processing.

The following table lists performance results regarding the reference 2D GC with only circular holes, and the proposed optical element according to Figures 1 and 2 with elliptical holes, as designed for C-band.

| Performance bench-marks | Reference 2D GC with circular holes only | Proposed 2D GC |
|---|---|---|
| Insertion loss | 4.4 dB | 4.1 dB |
| 1 dB bandwidth | 30 nm | 37 nm |
| Bandwidth with PDL < 0.5 dB | < 10 nm | 57.5 nm |
| Max. PDL within the 1 dB bandwidth | 1.7 dB | 0.65 dB |

The following table lists performance results regarding the reference 2D GC with only circular holes, and the proposed optical element according to Figures 1 and 2 with elliptical holes, as designed for O-band.

| Performance bench-marks | Reference 2D GC with circular holes only | Proposed 2D GC |
|---|---|---|
| Insertion loss | 3 dB | 3.2 dB |
| 1 dB bandwidth | 25 nm | 22 nm |
| Bandwidth with PDL < 0.5 dB | < 15 nm | 80 nm |
| Max. PDL within the 1 dB bandwidth | 1.2 dB | 0.5 dB |

In the exemplary embodiment of Figures 1 and 2 , the distance between the adjacent scattering centers SC is equal in the entire scattering unit.

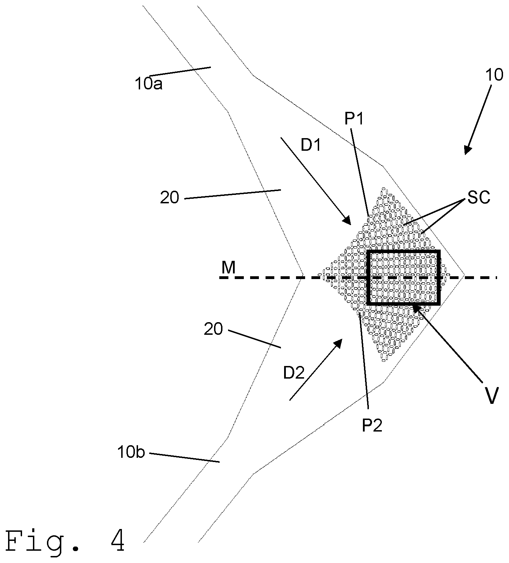

Figure 4 depicts a second exemplary embodiment of an optical element 10 according to the present invention. In contrast to Figures 1-3 , the distance between adjacent scattering centers SC varies. More specifically, in the exemplary embodiment of Figure 4 , the scattering centers SC form an array of scattering centers SC where the distance between adjacent scattering centers SC decreases from the access ports P1 and P2 towards the array's middle section.

Furthermore, the array's edges are circularly bent at the access ports P1 and P2 in order to enable mode coupling via shorter adjacent tapers 20.

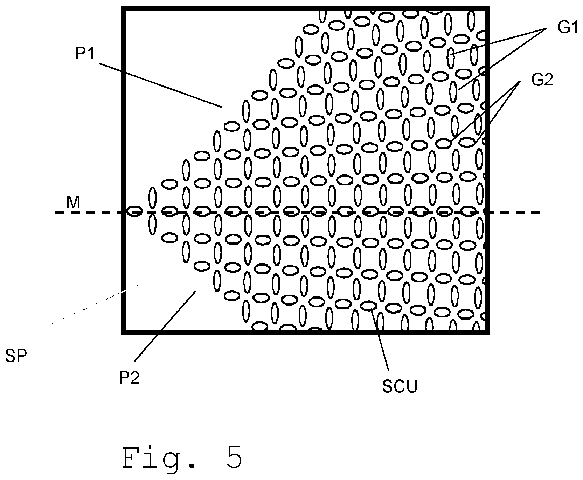

Figure 5 visualizes section V of Figure 4 and the arrangement of the scattering centers SC in further detail. The arrangement of the scattering centers SC in the scattering plane SP is again axially symmetric with respect to the mirror axis M that mirrors the first and second direction D1 and D2 with respect to one another. However, due to the bent edges of the scattering unit SCU, the arrangement of the scattering centers SC is axially asymmetric with respect to the first and/or second direction D1 and D2.

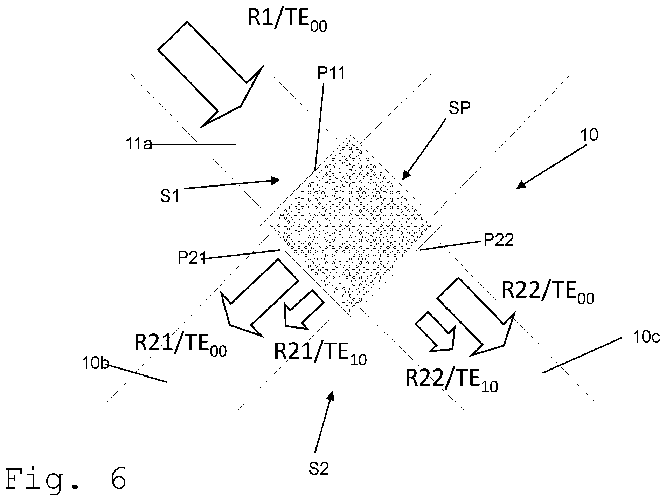

Figure 6 depicts a third exemplary embodiment of an optical element 10 according to the present invention.

On a first access side S1 of the optical element 10, an access port P11 is connected to a waveguide 11a. The access port P11 allows inputting radiation R11 with a first mode. In the exemplary embodiment of Figure 6 , the first mode is a TE00-mode.

A second access side S2 of the optical element 10 provides a first access port P21 and second access port P22. Each of the latter ports P21 and P22 outputs radiation R21/R22 that comprises the first mode, e. g. said TE00-mode, and at least a second mode in response to the radiation R11 that is inputted at the first access side S1. In the exemplary embodiment of Figure 6 , the second mode is a TE10-mode.

The ports P21 and P22 are connected to waveguides 10b and 10c. The waveguides 10a, 10b, and 10c as well as the scattering centers SC lie in the scattering plane SP.

The size, orientation and arrangement of scattering centers SC determines the conversion and the conversion ratios of the modes. The different sizes of the arrows in Figure 6 indicate that the amplitude of the TE10-mode may be smaller than the amplitude of the TE00-mode at the second access side S2.

The optical elements 10 described above in connection with Figures 1-9 can be fabricated based on 248 nm photolithography, which is significantly cheaper than a 193 nm photolithography or e-beam lithography.

The scattering centers SC discussed above may be used to minimize the parasitic scattered power at integrated receiver or transmitter interfaces, ensuring an efficient coupling in optical waveguides. Undesired effects such as higher-order modes excitation, PDL and polarization crosstalk may be minimized.

The exemplary embodiments described above in connection with Figures 1-9 are based on silicon photonic 2D grating couplers used as coupling structures. The principle can be used in other coupling structures or on other material platforms as well. The examples cope with passive components, but the principle can be applied to active elements as well. The major advantage of the proposed use of scattering centers compared to other solutions is the reduced fabrication complexity regarding the required minimum features dimensions. With this, even low-resolution lithographic techniques such as 248 nm deep UV lithography can be used for the fabrication, which allows for large-scale cost-effective fabrication.

## Claims

1. Optical element (10) comprising a plurality of scattering centers (SC) arranged in a scattering plane (SP) of the optical element (10),
wherein
- the optical element (10) comprises at least two oriented groups (G1, G2) of oriented scattering centers (SC),
- wherein a group-individual orientation (O1, O2) is assigned to each oriented group (G1, G2),
- wherein the scattering centers (SC) of each oriented group (G1, G2) are oriented in accordance with the same group-individual orientation (O1, O2), and
- wherein the group-individual orientations (O1, O2) are angled relatively to one another
**characterized in that**
the scattering centers (SC) define a pattern of repeating cells, each cell comprising a scattering center (SC) from each of said oriented groups (G1,G2).

2. Optical element (10) according to claim 1,
**characterized in that**
the angle between adjacent group-individual orientations (O1, O2) equals 180° divided by the number of group-individual orientations (O1, O2).

3. Optical element (10) according to any of the preceding claims,
**characterized in that**
- a first access side (S1) of the optical element (10) provides a first access port (P1) for inputting and/or outputting radiation (R1) along a first direction (D1) that lies in the scattering plane (SP), and a second access port (P2) for inputting and/or outputting radiation (R2) along a second direction (D2) that differs from the first direction (D1) and also lies in the scattering plane (SP),
- wherein the arrangement of the scattering centers (SC) in said scattering plane (SP) is axially symmetric with respect to the first and second direction (D1, D2).

4. Optical element (10) according to any of the preceding claims,
**characterized in that**
- the optical element (10) comprises a first access port (P1) for inputting and/or outputting radiation (R1) along a first direction (D1) that lies in the scattering plane (SP), and a second access port (P2) for inputting and/or outputting radiation (R2) along a second direction (D2) that is angled by an angle between 80° and 90° to the first direction (D1) and also lies in the scattering plane (SP),
- wherein the arrangement of the scattering centers (SC) in said scattering plane (SP) is axially symmetric with respect to a mirror axis that mirrors the first and second direction (D1, D2) with respect to one another.

5. Optical element (10) according to any of the preceding claims,
**characterized in that**
the scattering centers (SC) form an array of scattering centers (SC) where the distance between adjacent scattering centers (SC) increases from the array's center towards the array's edge.

6. Optical element (10) according to any of the preceding claims,
**characterized in that**
all of the scattering centers (SC) that belong to the same group (G1, G2) are identically shaped and/or sized.

7. Optical element (10) according to any of the preceding claims,
**characterized in that**
the scattering centers (SC) of the oriented groups (G1, G2) are rotationally asymmetric.

8. Optical element (10) according to any of the preceding claims,
**characterized in that**
the scattering centers (SC) of the oriented groups are axially symmetric with respect to the group-individual orientation (O1, O2) of their group (G1, G2).

9. Optical element (10) according to any of the preceding claims,
**characterized in that**
all scattering centers of the oriented groups are identically shaped and/or identically sized.

10. Optical element (10) according to any of the preceding claims,
**characterized in that**
the scattering centers (SC) of the oriented groups are elongated along the respective group-individual orientation (O1, O2).

11. Optical element (10) according to any of the preceding claims,
**characterized in that**
the optical element (10) further comprises at least one un-oriented group (G3) of un-oriented scattering centers (SC).

12. Optical element (10) according to any of the preceding claims,
**characterized in that**
the optical element (10) comprises at least one group (G3) of circular scattering centers (SC).

13. Optical element (10) according to any of the preceding claims,
**characterized in that**
- the optical element (10) comprises a first group (G1) of scattering centers (SC) and a second group (G2) of scattering centers (SC),
- wherein the scattering centers (SC) of the first group (G1) are oriented along a first orientation (O1),
- wherein the scattering centers (SC) of the second group (G2) are oriented along a second orientation (O2), and
- wherein the first orientation (O1) and the second orientation (O2) are angled by 90°.

14. Optical element (10) according to any of the preceding claims,
**characterized in that**
- a first access side (S1) of the optical element (10) provides an access port (P11) for inputting radiation (R11) having a first mode, and
- a second access side (S2) of the optical element (10) provides a first and second access port (P21, P22) each of which outputs radiation (R21, R22) having the first mode and at least a second mode in response to the radiation (R11) that is inputted at the first access side (S1).

15. Optical element (10) according to any of the preceding claims,
**characterized in that**
- the optical element (10) is a polarization de-/multiplexer,
- wherein the optical element (10) provides a first access port (P1) for inputting and/or outputting radiation (R1) having a first polarization, and a second access port (P2) for inputting and/or outputting radiation (R2) having a second polarization that differs from the first polarization, and
- wherein the optical element (10) provides a third access port (P3) for inputting and/or outputting radiation (R3) that has both, the first and second polarization.

## Patentansprüche

1. Optisches Element (10) mit einer Vielzahl von Streuzentren (SC), die in einer Streuebene (SP) des optischen Elements (10) angeordnet sind,
wobei
- das optische Element (10) mindestens zwei orientierte Gruppen (G1, G2) von orientierten Streuzentren (SC) umfasst,
- wobei jeder orientierten Gruppe (G1, G2) eine gruppenindividuelle Orientierung (O1, O2) zugeordnet ist,
- wobei die Streuzentren (SC) jeder orientierten Gruppe (G1, G2) in Übereinstimmung mit derselben gruppenindividuellen Orientierung (O1, O2) orientiert sind, und
- wobei die gruppenindividuellen Orientierungen (O1, O2) relativ zueinander gewinkelt sind
**dadurch gekennzeichnet, dass**
die Streuzentren (SC) ein Muster von sich wiederholenden Zellen definieren, wobei jede Zelle ein Streuzentrum (SC) aus jeder der orientierten Gruppen (G1, G2) umfasst.

2. Optisches Element (10) nach Anspruch 1,
**dadurch gekennzeichnet, dass**
der Winkel zwischen benachbarten gruppenindividuellen Orientierungen (O1, O2) 180° geteilt durch die Anzahl der gruppenindividuellen Orientierungen (O1, O2) entspricht.

3. Optisches Element (10) nach einem der vorhergehenden Ansprüche,
**dadurch gekennzeichnet, dass**
- eine erste Zugangsseite (S1) des optischen Elements (10) einen erste Zugangsanschluss (P1) zum Einspeisen und/oder Ausgeben von Strahlung (R1) entlang einer ersten Richtung (D1), die in der Streuebene (SP) liegt, und einen zweiten Zugangsanschluss (P2) zum Einspeisen und/oder Ausgeben von Strahlung (R2) entlang einer zweiten Richtung (D2), die sich von der ersten Richtung (D1) unterscheidet und ebenfalls in der Streuebene (SP) liegt, aufweist,
- wobei die Anordnung der Streuzentren (SC) in der Streuebene (SP) axialsymmetrisch in Bezug auf die erste und zweite Richtung (D1, D2) ist.

4. Optisches Element (10) nach einem der vorhergehenden Ansprüche,
**dadurch gekennzeichnet, dass**
- das optische Element (10) einen ersten Zugangsanschluss (P1) zum Einspeisen und/oder Ausgeben von Strahlung (R1) entlang einer ersten Richtung (D1), die in der Streuebene (SP) liegt, und einen zweiten Zugangsanschluss (P2) zum Einspeisen und/oder Ausgeben von Strahlung (R2) entlang einer zweiten Richtung (D2) umfasst, die um einen Winkel zwischen 80° und 90° zur ersten Richtung (D1) abgewinkelt ist und ebenfalls in der Streuebene (SP) liegt,
- wobei die Anordnung der Streuzentren (SC) in der Streuebene (SP) axialsymmetrisch in Bezug auf eine Spiegelachse ist, die die erste und zweite Richtung (D1, D2) zueinander spiegelt.

5. Optisches Element (10) nach einem der vorhergehenden Ansprüche,
**dadurch gekennzeichnet, dass**
die Streuzentren (SC) ein Array von Streuzentren (SC) bilden, wobei der Abstand zwischen benachbarten Streuzentren (SC) von der Mitte des Arrays zum Rand des Arrays hin zunimmt.

6. Optisches Element (10) nach einem der vorhergehenden Ansprüche,
**dadurch gekennzeichnet, dass**
alle Streuzentren (SC), die zur gleichen Gruppe (G1, G2) gehören, die gleiche Form und/oder Größe haben.

7. Optisches Element (10) nach einem der vorhergehenden Ansprüche,
**dadurch gekennzeichnet, dass**
die Streuzentren (SC) der orientierten Gruppen (G1, G2) rotationsasymmetrisch sind.

8. Optisches Element (10) nach einem der vorhergehenden Ansprüche,
**dadurch gekennzeichnet, dass**
die Streuzentren (SC) der orientierten Gruppen achsensymmetrisch in Bezug auf die gruppenindividuelle Orientierung (O1, O2) ihrer Gruppe (G1, G2) sind.

9. Optisches Element (10) nach einem der vorhergehenden Ansprüche,
**dadurch gekennzeichnet, dass**
alle Streuzentren der orientierten Gruppen die gleiche Form und/oder die gleiche Größe haben.

10. Optisches Element (10) nach einem der vorhergehenden Ansprüche,
**dadurch gekennzeichnet, dass**
die Streuzentren (SC) der orientierten Gruppen entlang der jeweiligen gruppenindividuellen Orientierung (O1, O2) gestreckt sind.

11. Optisches Element (10) nach einem der vorhergehenden Ansprüche,
**dadurch gekennzeichnet, dass**
das optische Element (10) außerdem mindestens eine nicht orientierte Gruppe (G3) von nicht orientierten Streuzentren (SC) umfasst.

12. Optisches Element (10) nach einem der vorhergehenden Ansprüche,
**dadurch gekennzeichnet, dass**
das optische Element (10) mindestens eine Gruppe (G3) von kreisförmigen Streuzentren (SC) umfasst.

13. Optisches Element (10) nach einem der vorhergehenden Ansprüche,
**dadurch gekennzeichnet, dass**
- das optische Element (10) eine erste Gruppe (G1) von Streuzentren (SC) und eine zweite Gruppe (G2) von Streuzentren (SC) umfasst,
- wobei die Streuzentren (SC) der ersten Gruppe (G1) entlang einer ersten Orientierung (O1) orientiert sind,
- wobei die Streuzentren (SC) der zweiten Gruppe (G2) entlang einer zweiten Orientierung (O2) orientiert sind, und
- wobei die erste Orientierung (O1) und die zweite Orientierung (O2) um 90° abgewinkelt sind.

14. Optisches Element (10) nach einem der vorhergehenden Ansprüche,
**dadurch gekennzeichnet, dass**
- eine erste Zugangsseite (S1) des optischen Elements (10) einen Zugangsanschluss(P11) zur Einspeisung von Strahlung (R11) mit einer ersten Mode bereitstellt, und
- eine zweite Zugangsseite (S2) des optischen Elements (10) einen ersten und einen zweiten Zugangsanschluss (P21, P22) bereitstellt, von denen jeder als Reaktion auf die Strahlung (R11), die an der ersten Zugangsseite (S1) eingespeist wird, Strahlung (R21, R22) mit der ersten Mode und mindestens einer zweiten Mode ausgibt.

15. Optisches Element (10) nach einem der vorhergehenden Ansprüche,
**dadurch gekennzeichnet, dass**
- das optische Element (10) ein Polarisations-Multiplexer/Demultiplexer ist,
- wobei das optische Element (10) einen ersten Zugangsanschluss (P1) zum Einspeisen und/oder Ausgeben von Strahlung (R1) mit einer ersten Polarisation und einen zweiten Zugangsanschluss (P2) zum Einspeisen und/oder Ausgeben von Strahlung (R2) mit einer zweiten Polarisation, die sich von der ersten Polarisation unterscheidet, bereitstellt, und
- wobei das optische Element (10) einen dritten Zugangsanschluss (P3) zum Einspeisen und/oder Ausgeben von Strahlung (R3) bereitstellt, die sowohl die erste als auch die zweite Polarisation aufweist.

## Revendications

1. Elément optique (10) comprenant une pluralité de centres de diffusion (SC) disposés dans un plan de diffusion (SP) de l'élément optique (10),
dans lequel
- l'élément optique (10) comprend au moins deux groupes orientés (G1, G2) de centres de diffusion (SC) orientés,
- dans lequel une orientation individuelle de groupe (O1, O2) est attribuée à chaque groupe orienté (G1, G2),
- dans lequel les centres de diffusion (SC) de chaque groupe orienté (G1, G2) sont orientés conformément à la même orientation individuelle de groupe (O1, O2), et
- dans lequel les orientations individuelles de groupe (O1, O2) sont inclinées les unes par rapport aux autres,
**caractérisé en ce que**
les centres de diffusion (SC) définissent un motif de cellules répétitives, chaque cellule comprenant un centre de diffusion (SC) de chacun desdits groupes orientés (G1, G2).

2. Elément optique (10) selon la revendication 1,
**caractérisé en ce que**
l'angle entre les orientations individuelles de groupe adjacentes (O1, O2) est égal à 180° divisé par le nombre d'orientations individuelles de groupe (O1, O2).

3. Elément optique (10) selon l'une quelconque des revendications précédentes,
**caractérisé en ce que**
- un premier côté d'accès (S1) de l'élément optique (10) fournit un premier port d'accès (P1) pour l'entrée et/ou la sortie d'un rayonnement (R1) le long d'une première direction (D1) qui se situe dans le plan de diffusion (SP), et un second port d'accès (P2) pour l'entrée et/ou la sortie d'un rayonnement (R2) le long d'une seconde direction (D2) qui diffère de la première direction (D1) et se situe également dans le plan de diffusion (SP),
- la disposition des centres de diffusion (SC) dans ledit plan de diffusion (SP) étant axialement symétrique par rapport à la première et à la seconde direction (D1 , D2).

4. Elément optique (10) selon l'une quelconque des revendications précédentes,
**caractérisé en ce que**
- l'élément optique (10) comprend un premier port d'accès (P1) pour l'entrée et/ou la sortie d'un rayonnement (R1) le long d'une première direction (D1) qui se situe dans le plan de diffusion (SP),
- et un second port d'accès (P2) pour l'entrée et/ou la sortie d'un rayonnement (R2) le long d'une seconde direction (D2) qui est inclinée d'un angle compris entre 80° et 90° par rapport à la première direction (D1) et se situe également dans le plan de diffusion (SP),
- la disposition des centres de diffusion (SC) dans ledit plan de diffusion (SP) est axialement symétrique par rapport à un axe de miroir qui reflète la première et la seconde direction (D1 , D2) l'une par rapport à l'autre.

5. Elément optique (10) selon l'une quelconque des revendications précédentes,
**caractérisé en ce que**
les centres de diffusion (SC) forment un réseau de centres de diffusion (SC) où la distance entre les centres de diffusion (SC) adjacents augmente du centre du réseau vers le bord du réseau.

6. Elément optique (10) selon l'une quelconque des revendications précédentes,
**caractérisé en ce que**
tous les centres de diffusion (SC) qui appartiennent au même groupe (G1 , G2) sont de forme et/ou de taille identiques.

7. Elément optique (10) selon l'une quelconque des revendications précédentes,
**caractérisé en ce que**
les centres de diffusion (SC) des groupes orientés (G1 , G2) sont asymétriques en rotation.

8. Elément optique (10) selon l'une quelconque des revendications précédentes, **caractérisé en ce que**
les centres de diffusion (SC) des groupes orientés sont axialement symétriques par rapport à l'orientation individuelle de groupe (O1, O2) de leur groupe (G1, G2).

9. Elément optique (10) selon l'une quelconque des revendications précédentes,
**caractérisé en ce que**
tous les centres de diffusion des groupes orientés sont de forme et/ou de taille identiques.

10. Elément optique (10) selon l'une quelconque des revendications précédentes,
**caractérisé en ce que**
les centres de diffusion (SC) des groupes orientés sont allongés le long de l'orientation individuelle de groupe (O1, O2) respective.

11. Elément optique (10) selon l'une quelconque des revendications précédentes,
**caractérisé en ce que**
l'élément optique (10) comprend en outre au moins un groupe non orienté (G3) de centres de diffusion (SC) non orientés.

12. Elément optique (10) selon l'une quelconque des revendications précédentes,
**caractérisé en ce que**
l'élément optique (10) comprend au moins un groupe (G3) de centres de diffusion (SC) circulaires.

13. Elément optique (10) selon l'une quelconque des revendications précédentes,
**caractérisé en ce que**
- l'élément optique (10) comprend un premier groupe (G1) de centres de diffusion (SC) et un second groupe (G2) de centres de diffusion (SC),
- les centres de diffusion (SC) du premier groupe (G1) étant orientés selon une première orientation (O1),
- les centres de diffusion (SC) du second groupe (G2) étant orientés selon une seconde orientation (O2), et
- la première orientation (O1) et la seconde orientation (O2) étant inclinées de 90°.

14. Elément optique (10) selon l'une quelconque des revendications précédentes,
**caractérisé en ce que**
- un premier côté d'accès (S1) de l'élément optique (10) fournit un port d'accès (P11) pour l'entrée d'un rayonnement (R11) ayant un premier mode, et
- un second côté d'accès (S2) de l'élément optique (10) fournit un premier et un second port d'accès (P21, P22) qui délivrent chacun un rayonnement (R21, R22) ayant le premier mode et au moins un deuxième mode en réponse au rayonnement (R11) qui est introduit au niveau du premier côté d'accès (S1).

15. Elément optique (10) selon l'une quelconque des revendications précédentes,
**caractérisé en ce que**
- l'élément optique (10) est un démultiplexeur/multiplexeur de polarisation,
- dans lequel l'élément optique (10) fournit un premier port d'accès (P1) pour l'entrée et/ou la sortie d'un rayonnement (R1) ayant une première polarisation, et un deuxième port d'accès (P2) pour l'entrée et/ou la sortie d'un rayonnement (R2) ayant une deuxième polarisation qui diffère de la première polarisation, et
- dans lequel l'élément optique (10) fournit un troisième port d'accès (P3) pour l'entrée et/ou la sortie d'un rayonnement (R3) qui a à la fois la première et la deuxième polarisation.
